Europäisches Patentamt

European Patent Office

Office européen des brevets

(11) Publication number: **0 100 132**
A2

(12) # EUROPEAN PATENT APPLICATION

(21) Application number: **83300868.3**

(22) Date of filing: **18.02.83**

(51) Int. Cl.³: **B 01 D 35/20**, B 01 D 35/28

(30) Priority: **24.07.82 GB 8221478**

(43) Date of publication of application: **08.02.84**
**Bulletin 84/6**

(84) Designated Contracting States: **BE DE FR NL**

(71) Applicant: **Derek Parnaby Cyclones International
Limited, Chilton Industrial Estate, Ferryhill County
Durham DL17 OPB (GB)**

(72) Inventor: **Parnaby, Derek, Whitworth Hall near
Spennymoor, County Durham, DL16 7QX (GB)**

(74) Representative: **Daunton, Derek, W. REID SHARPE &
CO. 24 Portland Terrace, Newcastle upon Tyne, NE2 1QS
(GB)**

(54) **Dewatering and compacting screen.**

(57) Material 19 to be dewatered is supplied to lower end 20 of foraminous structure 10 disposed between side fences 12, 14 and adapted to be vibrated by a vibrator unit 24 mounted between the fences 12, 14 by cheeks 20 which permit variation of the inclination of plate 26, on which the unit 24 is mounted, relative to the structure 10. The structure 10 is shaped to provide a plurality of side-by-side V-shaped or U-shaped troughs 40 along which the material 19 is progressed by the vibrations. As shown, these troughs are formed by truncated wedge-sectioned wires or strips 50 with lozenge or diamond-sectioned wires or strips 52 at the nadirs, but these troughs may be of rigid intersecting wire mesh, or of pliable mesh draped to define U-sectioned troughs.

ED221282                    - 1 -

DEWATERING AND COMPACTING SCREEN

This invention relates to dewatering and compacting screens.

Already known, for use in separating excess water from particulate material such as coal dust or shale dust, are dewatering screens which comprise flat, inclined or curved foraminous screens of net mesh or parallel wires. Furthermore, we have already proposed a curved screen which is vibrated in order to shake out excess water which may be retained by surface tension between particles or may cause hydraulic binding of particles.

Such dewatering screens may be used, for example, for the recovery of the output from cyclone

0100132

ED221282                        - 2 -

separators or other particle classification
apparatus where the output takes the form of a
slurry or a stream of water-borne or suspended
particles.

Screens of these types produce a wet
low-density mass of particles.

An object of this invention is to provide a
screen which not only allows separation and draining
of excess water, but also enables the particulate
material to leave the screen in a compacted form
for ease of handling.

According to the invention a dewatering and
compacting screen has a foraminous surface of a
configuration providing a plurality of substantially
parallel contiguous troughs, separated by ridges.

The troughs preferably extend longitudinally
of the screen and are preferably of U-section or
V-section, the intervening ridges being of
complementary shape.

ED221282                    -  3 -

The screen preferably comprises a plurality
of bars defining the crests of the ridges and
supporting the troughs of the screen therebetween.

The foraminous surface may be provided by
a mesh of intersecting wires, and this mesh may
be draped over the bars.

Preferably, however, the foraminous surface
is provided by a plurality of substantially parallel
strips or wires extending in the longitudinal
directions of the troughs and ridges.  Each said
strip or wire is advantageously of truncated-wedge-
shaped cross-section with the broader face of each
strip or wire facing against the direction of
water flow through the screen.  The strips or wires
may be spaced to retain particles from 0.1 mm or
smaller.

In the case where the crests of the ridges
are provided by bars, the presence of the latter
may serve to impart structural strength.  Similar

0100132

ED221282                          - 4 -

bars may be provided in the case where the foraminous
surface is provided by a wire mesh, for supporting
the mesh which maybe a rigid ridges mesh, or may
be a limp mesh draped over the bars.

The troughs and intervening ridges can be of
cross-section other than V-section. For example,
they may be of U-section or sinusoidal cross-section,
or the troughs may be parabolic in section, separated
by generally cuspoid section ridges in the case of
a limp mesh screen.

The strips or wires may be of width, e.g. over
their broader faces, of the order of three to ten
times the spacing between the strips or wires, e.g.
1 mm or so.

Each trough may have, at its nadir, a strip
or wire of diamond or lozenge cross-section,
preferably of greater size than the other strips
or wires, e.g. 5 to 6 mm deep by 3 to 4 mm broad.

In accordance with further aspect of the invention
the dewatering and compacting screen further includes vibrator means for vibrating the screen. Such vibrator means may comprise one or more magnetic or solenoid vibrators, or eccentrically-loaded rotating shafts or fly wheels.

In an important preferred embodiment, the inclination of the vibrator means relative to the screen is variable. The arrangement may be such that the variation is through a range of angles by reason of the vibrator means being mounted between a pair of segmental cheeks each with an arcuate slot or an arcuate row of bolt holes permitting the variation of the inclination of the vibrator means, whereby the trajectories of particles on the screen may be varied in accordance with practical requirements.

The invention will be described further, by way of example, with reference to the accompanying drawings, in which:-

Fig. 1 is a diagrammatic perspective view, illustrating a preferred embodiment of the dewatering and compacting screen of the invention;

ED221282                    - 6 -

Fig. 2 is a fragmentary part-sectional and
view illustrating certain details of the components
providing the foraminous screen of Fig. 1 to an
enlarged scale;

Fig. 3 is another fragmentary detail of
certain other parts of the screen of Fig. 1;

Fig. 4 is a diagram illustrating the particle
trajectories obtained when a vibrator unit, forming
part of the screen of Figs. 1 , 2, and 3, is at a
first angle of inclination (for instance $15^{\circ}$)
relative to the foraminous surface of the screen;

Fig. 5 is a diagram comparable with Fig. 4,
but illustrating the trajectories obtained when
the vibrator unit is at another angle of inclination
(for instance $30^{\circ}$) relative to the foraminous
surface;

Fig. 6 is a diagram comparable with Figs. 4
and 5, but illustrating the trajectories obtained
when the vibrator unit is at a third angle of inclination (for instance 45°) relative to said
surface;

Fig. 7 is a view comparable with Fig. 2
but illustrating a modified arrangement providing
the foraminous surface;

Fig.  8 is a view comparable with Figs. 2
and 7, but showing another alternative arrangement;

Fig.  9 is a fragmentary perspective view
illustrating details of the vibrator in another
embodiment of the screen of the invention.

Throughout the various figures of the drawings,
similar reference numerals have been allocated to
similar parts.

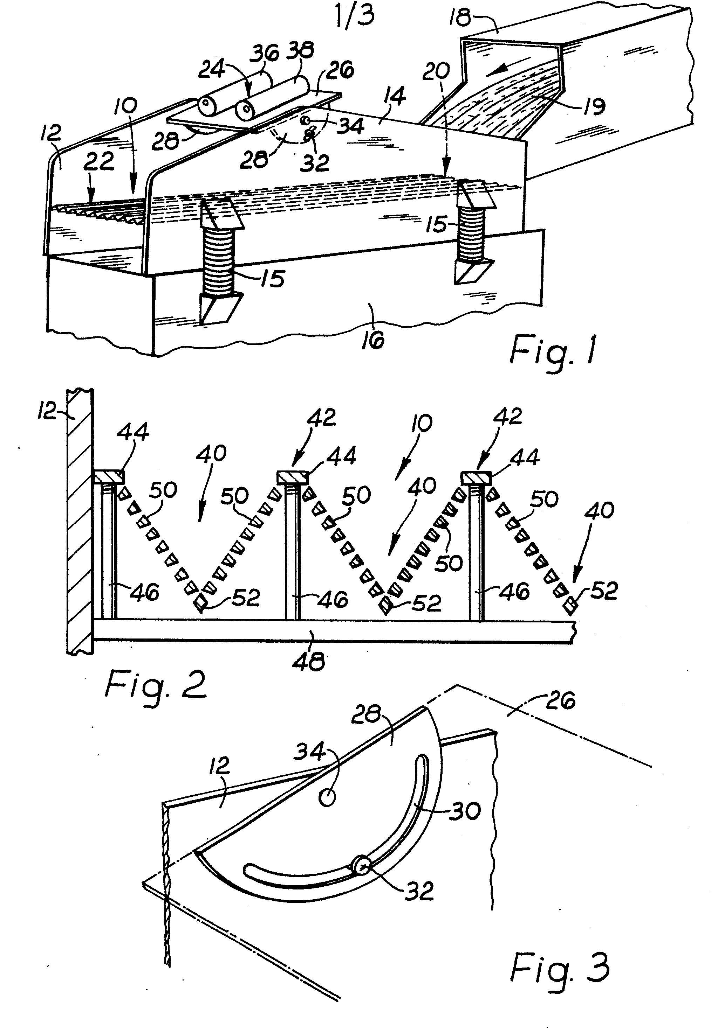

Referring firstly to Figs. 1 to 6, a compacting
and dewatering screen according to the invention
comprises a foraminous structure 10 disposed
between side fences 12, 14 and supported by springs
15 above a base 16 incorporating a settling tank
or effluent collecting and disposal arrangement.

ED221282                    - 8 -

A chute 18 is arranged to deposit material 19 for dewatering onto inlet end 20 of the structure 10, the structure 10 being mounted so that the inlet end 20 is lower than, and the structure 10 is inclined slightly upwardly to, the other end 22 which is the discharge end.

A vibrator unit 24 is mounted above the foraminous structure 10 on a mounting plate 26 (see Fig. 3) extending between the side fences 12, 14 and mounted on the latter by means of segmental cheeks in the form of semi-circular brackets 28 which each have therein a respective arcuate slot 30 co-operating with a respective bolt 32 the respective side fence 12, 14 for adjusting the angle of inclination at which the mounting plate 26 is secured relative to the foraminous structure 10. Each bracket 28 is pivotably mounted on a respective pivot 34. The vibrator unit 24 comprises a pair of parallel vibrators 36, 38. These preferably comprise a pair of parallel shafts each eccentrically loaded and driven in synchronism preferably from a common drive. The eccentric loading of the shafts

ED221282                    - 9 -

may be offset angularly to produce two vibrations
in each rotation, or such loading may be aligned
to produce a single reinforced vibration in each
rotation.  Alternatively, the vibrators 36, 38
may comprise a pair of synchronised electromagnetic vibrators of the coil and plunger type,
arranged to operate  at one or more frequencies
and one or more synchronisation patterns by means
of a suitable switching programme controlling
energisation of the coils.


Referring to Fig. 2, the foraminous structure
10 presents an upwardly-directed foraminous screening
surface and comprises a plurality of longitudinally-
extending contiguous troughs 40 separated by
corresponding substantially parallel ridges 42.
The crests of the ridges 42 are defined by longitudinal
bars 44 supported by spaced pillars 46 mounted on
cross members 48 extending between the side fences
12, 14.  Each trough 40 comprises a plurality of
rigid strips or wires 50 of truncated-wedge-shaped
cross-section disposed in a V-cross sectioned array, and with a strip or wire 52 of a lozenge or diamond cross-section disposed at the nadir or lower apex of the trough. The spacing between the strips or wires 50 is such as to pass particles of a desired range of sizes and may, for example, be below 1 mm or 0.1 mm, with the bars 50 being of millimeter dimensions.

In operation of the apparatus, the material 19 is supplied onto the inlet end 20 of the foraminous structure 10, and the vibrator unit 24 is energised to cause vibrations to be transmitted to the structure 10 by way of the side fences 12, 14 so that such structure 10 reciprocates with a component of movement parallel to the longitudinal directions of the troughs 40. The vibrations imparted to the structure 10 cause the particulate matter in the material 19 being dewatered to migrate along the foraminous surface of the structure 10 and excess water to be shaken out of the mass of particulate material downwards into the base 16. The troughs 40 constrain the particles to be compacted by the combined effects of gravity and the vibration of the structure.

In the separation of defined particles, e.g. of coals and shales, the screen presents the advantage of rapid dispersal of excess suspension liquor. The water, substantially free of suspended particles in the troughs 40, freely passes through the unobstructed gaps between the strips or wires 50.

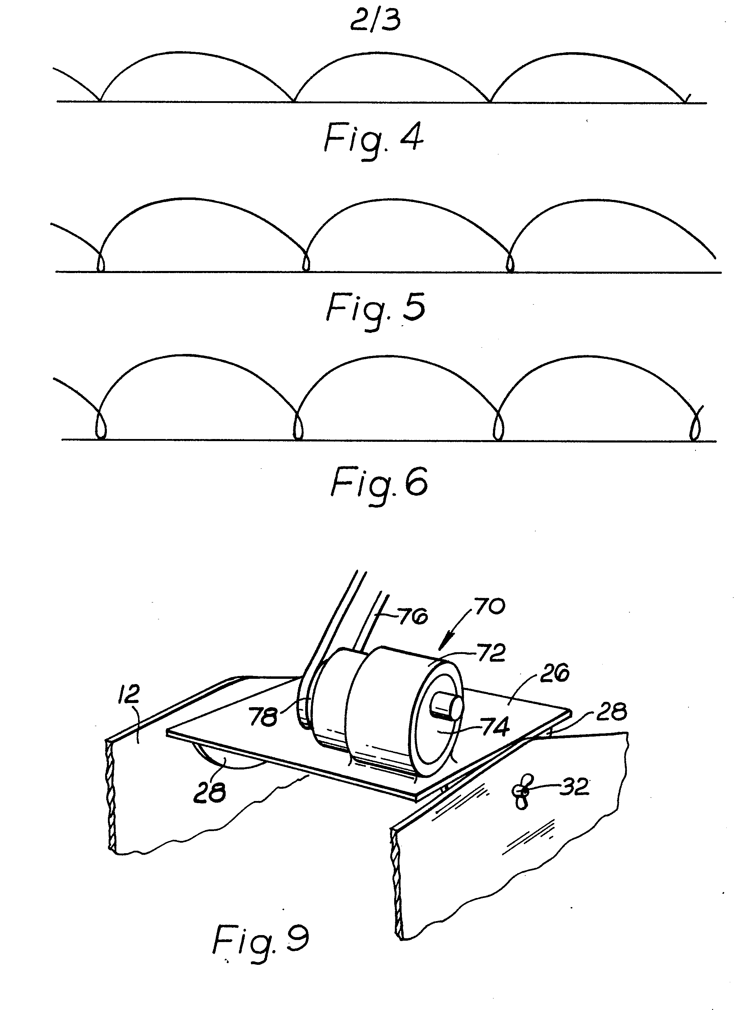

Figs. 4, 5 and 6 illustrate diagrammatically the effect of varying the angle of inclination of the mounting plate 26 supporting the vibrator unit 24, relative to the general plane of the foraminous upper surface of the structure 10. If the structure 10 and plate 15 are substantially parallel, the particles merely reciprocate (not illustrated) as in the case of an ordinary reciprocating screen, similar to a winnowing screen. With increasing inclination of the plate 26, however, the vertical component of the particle trajectory increases, and the particles migrate along the screen in the sense of the upper pass of rotation of the trajectory of vibration, so that the particles are made to migrate from the inlet end 20 to the outlet end 22 of the structure 10. Fig. 4 shows diagrammatically the approximate trajectories obtained when the plate 26 is set at an angle of $15^{o}$ relative to the structure 10. Figs. 5 and 6 show correspondingly the trajectories obtained respectively with inclinations of $30^{o}$ and $45^{o}$. An increased inclination up to $60^{o}$ may be used, giving a further increased vertical component in the particle trajectory.

The invention is not confined to the precise details of the embodiment of the apparatus as so far described. Thus, for instance, the foraminous structure 10 may be divided into areas of different gap or mesh size, for instance with the finer gap or mesh sizes being adjacent the inlet end 20 and coarser sizes being disposed towards the outlet end 22.

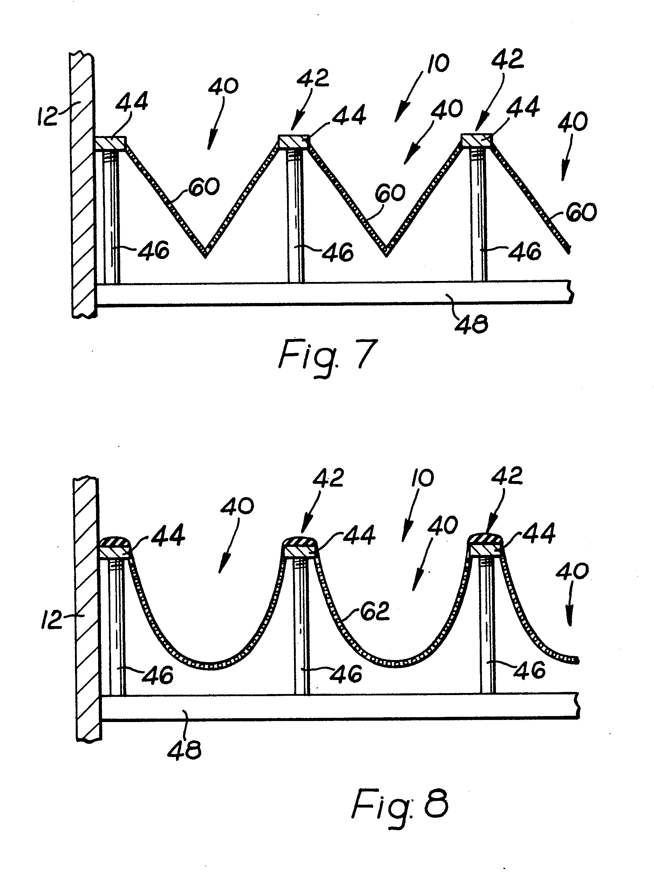

Moreover, it is not essential to the invention that the troughs 20 should be defined by longitudinal strips or wires. Fig. 7 shows, for example, an arrangement in which the troughs 40 are defined by elements 60 each of a rigid mesh, e.g. of intersecting

ED221282                        -13-

wires, and each of V shape in cross-section, the edges of these elements 60 being fixed by their longitudinal edges to the bars 44. In contrast, Fig. 8 illustrates the case where the entire foraminous structure 10 comprises a pliable mesh 62 which is draped upon the bars 44 so that the troughs 20 are substantially U-shaped or parabolic in cross-section.

Fig. 9 illustrates an alternative embodiment of vibrator unit, indicated generally by reference numeral 70, which may be employed in the place of the unit 24. This unit 70 comprises a single housing 72 enclosing two parallel shafts (not visible) each eccentrically loaded, e.g. by a cam or crank 74 and driven via a belt 76 and pulley 78 and connecting gearing (not shown).

Other variations are, of course, possible within the scope of the following claims.

ED221282                    - 14 -

CLAIMS

1.    A dewatering and compacting screen having a
foraminous surface of a configuration providing a
plurality of substantially parallel contiguous
troughs, separated by ridges.

2.    A dewatering and compacting screen as claimed
in claim 1 wherein the troughs extend longitudinally
of the screen.

3.    A dewatering and compacting screen as claimed
in claim 1 or 2 wherein the troughs are of U-section
or V-section, with complementary intervening ridges.

4.    A dewatering and compacting screen as claimed
in claim 1 or 2 comprising a plurality of bars
defining the crests of the ridges and supporting
the troughs of the screen therebetween.

5.    A dewatering and compacting screen as claimed
in any preceding claim wherein the foraminous surface

ED221282                    - 15 -

is provided by a mesh of intersecting wires.

6.   A dewatering and compacting screen as claimed
in claims 4 and 5 wherein the mesh is draped over
the bars.

7.   A dewatering and compacting screen as claimed
in any of claims 1 to 4 wherein the foraminous
surface is provided by a plurality of substantially
parallel strips or wires extending in the longitudinal
directions of the troughs and ridges.

8.   A dewatering and compacting screen as claimed
in claim 7 wherein the strips or wires are of
truncated-wedge-shaped cross-section with the broader
face of each strip or wire facing against the
direction of water flow through the screen.

9.   A dewatering and compacting screen as claimed
in claim 7 or 8 wherein the strips or wires are
spaced to retain particles from 0.1 mm or smaller.

10.   A dewatering and compacting screen as claimed in
claim 7, 8 or 9 wherein the width of the broader face
of each strip or wire is of the order of three
to ten times the spacing between the strips or wires.

11.   A dewatering and compacting screen as claimed in any of claims 7 to 10 wherein each trough has, at its nadir, a strip or wire of diamond or lozenge cross-section.

12.   A dewatering and compacting screen as claimed in any preceding claim further including vibrator means for vibrating the screen.

13.   A dewatering and compacting screen as claimed in claim 12 wherein the vibrator means for vibrating the screen comprises one or more magnetic or solenoid vibrators, or eccentrically-loaded rotating shafts or fly wheels.

14.   A dewatering and compacting screen as claimed in claim 12 or 13 wherein the inclination of the vibrator means relative to the screen is variable.

15.   A dewatering and compacting screen as claimed in claim 14 wherein the vibrator means is mounted between a pair of segmental cheeks each with an arcuate slot or an arcuate row of bolt holes permitting the variation of the inclination of the vibrator means, whereby the trajectories of the particles on the screen may be varied.

0100132

Fig. 1

Fig. 2

Fig. 3

Fig. 4

Fig. 5

Fig. 6

Fig. 9

Fig. 7

Fig. 8